# EUROPEAN PATENT APPLICATION

(11) **EP 4 474 186 A1**
(43) Date of publication of application: **11.12.2024**
(21) Application number: 23177315.1
(22) Date of filing: 05.06.2023
(51) Int. Cl.: B60K 1/04

(54) **STRUCTURAL BATTERY PACK**

(71) Applicant: Polestar Performance AB, 405 31 Gothenburg (SE)
(72) Inventor: WASSMUR, Robert, 434 46 Kungsbacka (SE); MURTHY, Vikram Tutpet Keshava, 461 58 Trollhättan (SE)
(74) Representative: Zacco Sweden AB

(57) **Abstract**

The present disclosure relates to a structural battery pack (200) for integration into an electric vehicle (100), the structural battery pack (200) comprising:
a common bottommost interface surface (210), a common uppermost interface surface (220), wherein said bottommost and uppermost interface surfaces (210, 220) when connected, form a structure of the SBP (200). Further, comprising front and rear extrusions (202a, 205a, 202b, 205b) extruding from front and rear portions thereof respectively, each front extrusion (202a, 205a) being arranged to be integrated into a front exterior assembly (250) of a front vehicle portion (104), and each rear extrusion (202b, 205b) is arranged to be integrated into a rear exterior assembly (260) of a rear vehicle portion (106) thereby said SBP establishes a structural chassis of the electric vehicle (100). The disclosure further relates to an electric vehicle (100) comprising said SBP (200).

## Description

### TECHNICAL FIELD

The present disclosure relates to a structural battery pack (SBP) and an electric vehicle comprising such a structural battery pack.

### BACKGROUND

Electric vehicles are becoming increasingly popular as consumers look to decrease their environmental impact and improve air quality. Instead of a traditional internal combustion engine, electric vehicles include one or more motors powered by a rechargeable battery pack, for example known as rechargeable energy storage systems (REESS). Most rechargeable battery packs are made up of a plurality of individual battery cells configured to provide electrical power to the one or more motors.

Conventionally, the rechargeable battery packs are enclosed in a structurally supportive enclosure or housing (often referred to as a "battery tray") representing a bottom and one or more sides of a structural vessel defining a compartment. Typically such battery trays are constructed of a rigid metal, such as an aluminum alloy, or the like. For improved structural rigidity, often the battery tray includes additional rigid structures, such as cross members, which can provide structural support to the battery pack as well as surfaces within the compartment on which other components of the battery pack can be affixed.

The individual battery cells are often grouped into distinct clusters (sometimes referred to as "battery modules"). In addition to the battery modules, a variety of other components can be packed into the compartment before a rigid cover is affixed to a top surface of the battery tray, thereby sealing the compartment. These components can include electrical current transmission systems, safety systems, battery management systems, and current management systems. An electrically conductive battery bus bar, typically comprised of a copper wire and strips, interconnects the various components and enables power distribution within the battery pack.

Conventional electric vehicles typically include a plurality of battery modules electrically coupled together to form a battery pack. The battery pack is typically pre-assembled on a battery support structure that is then mounted as one full battery assembly to the already fabricated vehicle frame. The connections between the battery assembly and the separate vehicle frame can provide pathways for noise, vibration, and harshness (NVH). Complete battery packs can also be very heavy, making assembly difficult and requiring thick, heavy frames and similarly robust mounts to secure the battery assembly to the frame. Furthermore, the mass of the separate battery assembly can add to sheer stresses in the frame.

Although conventional electric vehicle battery packs have been found to be generally effective in storing and delivering electrical energy for use in powering the one or more motors, the overall structure and integration of the battery cells into the electric vehicle is inefficient. That is, electric vehicle battery packs, although necessary, add a significant amount of mass to the vehicle, which negatively affects performance (e.g., hinders 0-60 mph acceleration time and 60-0 mph braking distance), as well as decreases the effective range of the vehicle and leave inefficiently utilized space in which additional power may implemented and utilized, while providing improved structural integrity to the overall vehicle. Hence, there is a need in the present art to provide an arrangement for securing battery modules in a vehicle that is more compact than conventional arrangements while being more convenient to manufacture and assemble. Preferably, such an arrangement should also be able to handle high forces as efficient or more efficiently than conventional arrangements. Accordingly, there is a need for a compact arrangement that is able to secure battery modules in a vehicle while providing rigidity/robustness to said vehicle.

### SUMMARY OF THE DISCLOSURE

It is therefore an object of the present disclosure to alleviate at least some of the mentioned drawbacks by providing a structural battery pack (SBP) that is compact while being robust/rigid when integrated within an electric vehicle. This and other objects, which will become apparent in the following, are achieved by a structural battery pack and a vehicle comprising said structural battery pack. The present disclosure relates to a structural battery pack (SBP) for integration into an electric vehicle, the structural battery pack comprising a plurality of body cross members and body longitudinal members jointly defining a common bottommost interface surface. Further, the SBP comprises a plurality of battery cross members and battery longitudinal members jointly defining a common uppermost interface surface, wherein said bottommost and uppermost interface surfaces when connected, form a structure of the SBP. The members may be formed in e.g. metal or any other suitable material. The longitudinal member may be arranged to extend along a length of a vehicle and the cross members may be arranged to extend along a width of a vehicle.

The battery cross and battery longitudinal members are arranged to be connected to a base plate for jointly with the base plate forming a support surface for said at least one battery module.

Moreover, inner edges of said body longitudinal member form a lip, the lip being arranged to receive a floor panel of said electric vehicle so that the floor panel covers a top surface of said body cross members. The base plate and the floor panel being arranged to jointly encase at least one battery module therebetween. Further, each body longitudinal members and battery longitudinal members define front and rear extrusions/portions extruding from front and rear portions thereof respectively, each front extrusion being arranged to be integrated into a front exterior assembly of a front vehicle portion, and each rear extrusion is arranged to be integrated into a rear exterior assembly of a rear vehicle portion thereby said SBP establishes a structural chassis of the electric vehicle.

An advantage of the SBP according to the present disclosure is that it forms a compact but rigid structure capable of handling high forces (specifically torsion forces).

In some aspects, each battery cross member may be dimensioned to connect to a corresponding body cross member and each battery longitudinal member is dimensioned to connect to a corresponding body longitudinal member.

An advantage of such a connection configuration is the the joining parts jointly improves rigidity of the structure.

Each battery cross member may be is welded between a pair of battery longitudinal members and each body cross member may be welded between a pair of body longitudinal members.

As the cross members are subject to loads from the passenger compartment of the vehicle, by welding said cross members to the longitudinal members, they may with the longitudinal members, jointly provide improved torsional, bending and crash rigidity.

The SBP may define a vehicle sil, and a vehicle battery pack/box/space arranged to receive battery modules of an electric vehicle. Accordingly, the structure of the SBP may form sil and battery pack. Thereby, the SBP provides material efficiency and manufacturing convenience as the sil and the battery pack are integral with the SBP.

The base plate, battery longitudinal members, and battery cross members may in some aspects form a bottom battery structure, wherein said body longitudinal members, body cross members and floor panel form a top battery structure, wherein the top battery structure is welded to said front and rear exterior assembly of the vehicle, wherein said bottom battery structure is releasably attached to said top battery structure.

An advantage with this is that the SBP is structurally rigid while allowing the SBP to be conveniently demounted (from below the vehicle) for managing the battery modules between the top and bottom battery structure.

The rear exterior assembly may comprise at least one of a c-pillar and subframe of said electric vehicle, wherein the front exterior assembly may comprise at least one of an a-pillar, fire wall and bumper beam of said electric vehicle. Accordingly, the SBP may be welded between c-pillar/subframe and a-pillar/fire wall/bumper beam of said electric vehicle.

The connected body longitudinal members and battery longitudinal members jointly form a longitudinally extending cavity arranged to receive a longitudinally extending pipe sub assembly of said vehicle.

In some aspects, the cavity may receive other components. An advantage with this is improved compactness.

The cavity may be formed between a side surface of said battery longitudinal members and a part of a bottommost interface surface of said body longitudinal member.

In some aspects, the bottommost interface surface and the uppermost interface surface each are formed as a flat, uniform surface, creating a uniform sealing force throughout the entire marriage between each body cross member and corresponding battery cross member and between each body longitudinal member and corresponding battery longitudinal member.

The floor panel may defined a battery pack lid. Thereby improving the space efficiency of the SBP as the floor panel also functions as a battery pack lid, thereby allowing the vehicle to store more batteries which leads to improved range of the vehicle.

The bottommost and uppermost interface surfaces may be connected by fastening means. E.g bolts, screws, nuts or any other suitable fastening means. The fastening means may be releasably attachable so that part of the SBP may be demounted from below the vehicle to access the battery modules therein for e.g. maintenance.

In some aspects herein the SBP may comprise a seat rail arrangement attached to the floor panel or attached to the body cross members. The seat rail arrangement may comprise longitudinally extending seat rails, wherein a pair of longitudinally extending seat rails are arranged to receive at least one passenger seat unit.

The present disclosure further provides an electric vehicle comprising a vehicle frame comprising a front vehicle portion with a front exterior assembly, a rear vehicle portion with a rear exterior assembly and a battery module. Further, the SBP according to any aspect herein is connected between said front exterior assembly and said rear exterior assembly. Further, the battery module is positioned between said base plate and said floor panel.

A seat rail arrangement of said vehicle may in some aspects be attached to said floor panel and/or body cross members, said seat rail arrangement being arranged to receive passenger seat units. The floor panel may be flat, the floor panel being vertically supported by said lip and body cross members. The seat rail arrangement may comprise at least one pair of seat rails arranged to receive at least one passenger seat unit. Each one of the pair of seat rails may be connected to at least two body (in some aspects three) cross members. A specific aspect of the vehicle herein may comprise a seat rail arrangement comprising two pairs of seat rails.

### BRIEF DESCRIPTION OF THE DRAWINGS

The disclosure can be more completely understood in consideration of the following detailed description of various embodiments of the disclosure, in connection with the accompanying drawings, in which:
FIG. 1 is an electric vehicle comprising an integrated structural battery pack in accordance with embodiments of the disclosure;
FIG. 2 is a perspective view depicting a structural battery pack;
FIG. 3 is an objective view of a structural battery pack in accordance with embodiments of the disclosure;
FIGS. 4 depicts a cross sectional front view A-A of a part of the structural battery pack in accordance with embodiments of the disclosure;
FIGS. 5A-B are cross sectional front views A-A of parts of the structural battery pack in accordance with embodiments of the disclosure;
FIG. 6 is a perspective view of a battery module(s) depicted in accordance with embodiments of the disclosure.

While embodiments of the disclosure are amenable to various modifications and alternative forms, specifics thereof shown by way of example in the drawings will be described in detail. It should be understood, however, that the intention is not to limit the disclosure to the particular embodiments described. On the contrary, the intention is to cover all modifications, equivalents, and alternatives falling within the spirit and scope of the subject matter as defined by the claims.

### DETAILED DESCRIPTION

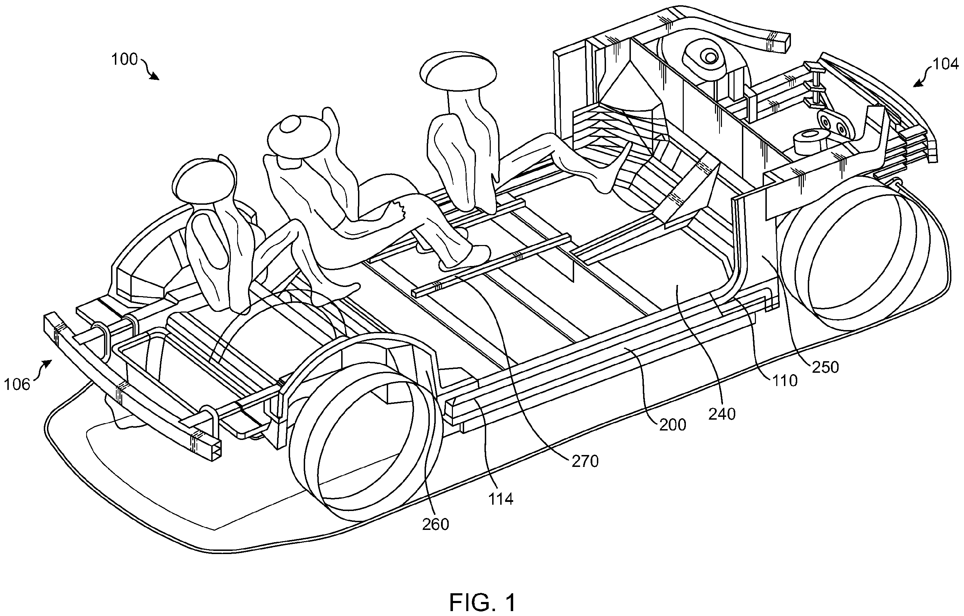

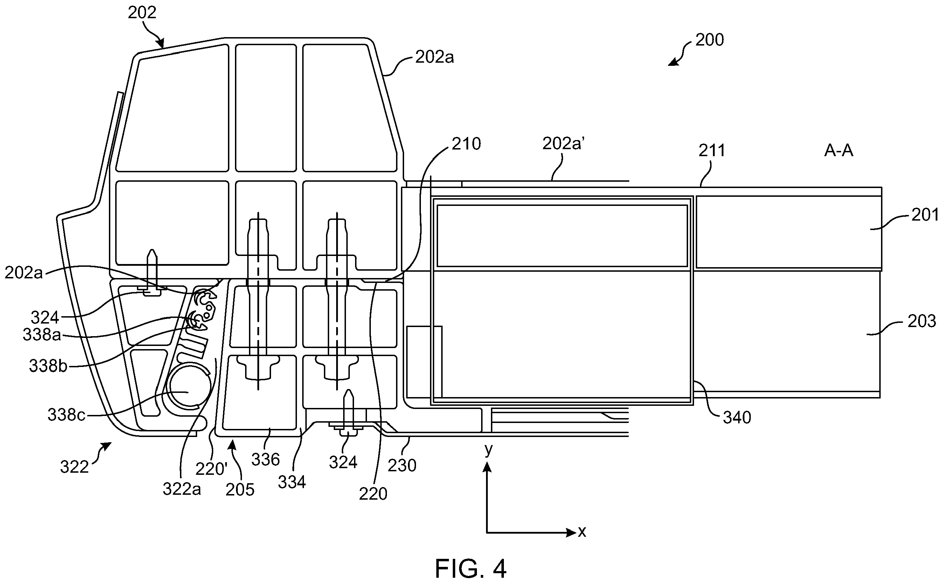

Referring to FIG. 1, an electric vehicle 100 comprising a structural battery pack (SBP) 200 integrated to a front portion 104 of the electric vehicle 100 and a rear portion 106 of the electric vehicle 100. The SBP having a front and rear portions 110, 114 configured to enable power distribution and provide structural support to electric vehicle 100 depicted in accordance with an embodiment of the disclosure. The vehicle 100 may further comprise a rear exterior assembly 260 at the rear portion 106. The rear exterior assembly may comprise at least one of a c-pillar and subframe of said electric vehicle 100. Further, the vehicle 100 may comprise a front exterior assembly 260 at a front portion 104 thereof. The front exterior assembly may comprise at least one of an a-pillar, fire wall and bumper beam of said electric vehicle 100. The electric vehicle 100 may have the SBP 200 according to any aspect herein connected between said front exterior assembly and said rear exterior assembly 250, 260. The battery module of the vehicle 100 may be positioned between a base plate (not shown) and a floor panel 240 of the SBP 200. Further, as illustrated in Figure 1, a seat rail arrangement 270 of said vehicle is attached to said floor panel 240. The seat rail arrangement 270 being arranged to receive passenger seating units. In some aspects, the floor panel 240 is flat and vertically supported by a lip (see 202a' in Figure 4) and body cross members (see 201 in Figure 4) of said SBP 200. The SBP 200 may comprise battery modules or be arranged to receive battery modules for powering propulsion of said electric vehicle 100.

As depicted, the SBP 200 can represent a distinct structural unit separable from the electric vehicle 100, the SBP 200 containing clusters of individual battery cells (sometimes referred to as "battery modules") and other battery related components. The SBP 200 can be representative as the frame or chassis of the vehicle 100 and in some embodiments can be positioned as the cabin floor of the vehicle 100, thereby maintaining a low center of gravity. For example, the SBP 200 may be positioned below the passenger compartment, which is generally considered an ideal location as the SBP 200 is integrated as the frame or chassis, which aids in maintaining a low center of gravity of the electric vehicle 100 and is spaced away from the outer body of the vehicle, and therefore less prone to being damaged in a collision.

Various embodiments of the present disclosure will be described in detail with reference to the drawings, wherein like reference numerals represent like parts and assemblies throughout the several views. Various directions and orientations, such as "upward," "downward," "top," "bottom," "upper," "lower", etc. are generally described herein with reference to the drawings in the usual gravitational frame of reference, regardless of how the components may be oriented.

Additionally, the terms "battery," "cell," and "battery cell" may be used interchangeably and may refer to any of a variety of different cell types, chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configurations. The term "battery pack" as used herein refers to multiple individual batteries contained within a single piece or multi-piece housing, the individual batteries electrically interconnected to achieve the desired voltage and capacity for a particular application. The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

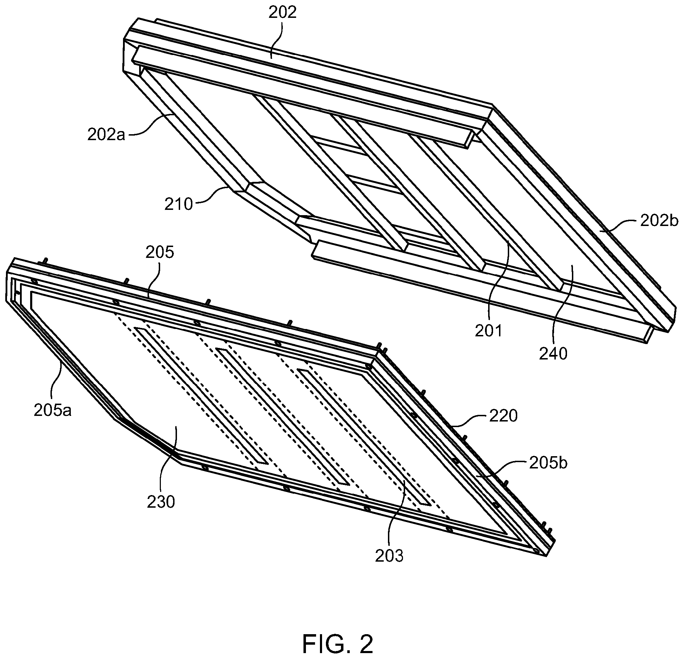

Figure 2 illustrates an objective view of an exploded structural battery pack 200, SBP, for integration into an electric vehicle (as shown in Figure 1) the structural battery pack 200 comprising a plurality of body cross members/beams 201 and (at least a pair of) body longitudinal members/beams 202 jointly defining a common bottommost interface surface 210 and a plurality of battery cross members 203 (dotted line depicting cross members) and battery longitudinal members 205 jointly defining a common uppermost interface surface 220. The bottommost and uppermost interface surfaces 210, 220 when connected, define the structure of the SBP 200.

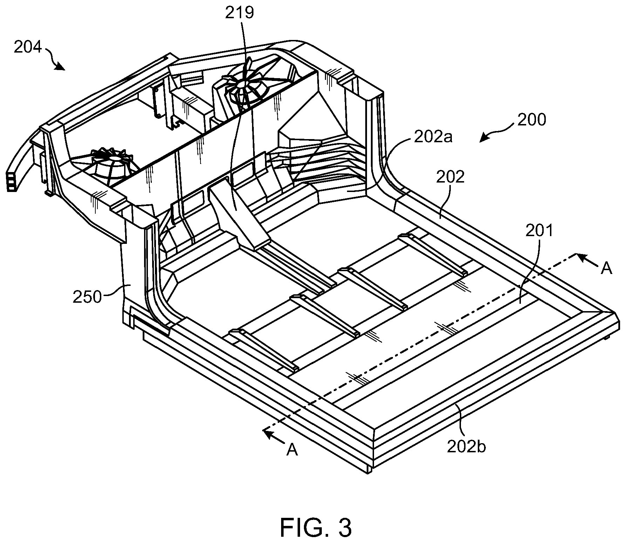

The battery cross and battery longitudinal members/beams 203, 205 are arranged to, at a surface opposing the uppermost interface surface 220, be connected to a base plate 230 for forming a support surface for said at least one battery module (see Figure 3 for battery module).

Further, inner edges 202a of said body longitudinal member form a lip see (Figure 3), the lip being arranged to receive a floor panel 240 of said electric vehicle so that the floor panel 240 covers a top surface 211 (shown in Figure 4) of said body cross members 201.

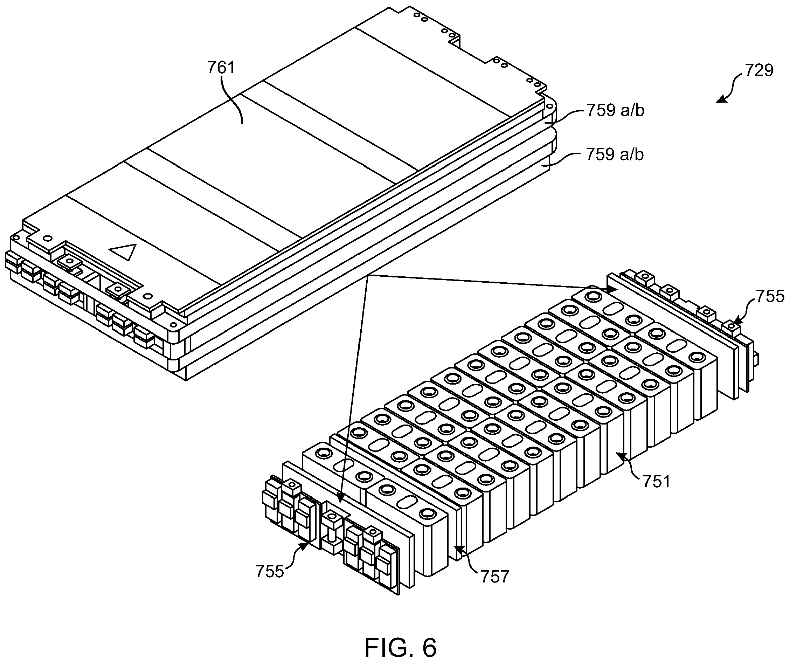

The base plate 230 and the floor panel 240 being arranged to jointly encase at least one battery module 340 (shown in Figure 6) therebetween.

Further, Figure 2 illustrates that each body longitudinal members and battery longitudinal members 202, 205 define front and rear extrusions 202a, 205a, 202b, 205b extruding from front and rear portions thereof respectively, each front extrusion 202a, 205a being arranged to be integrated into a front exterior assembly 250 of a front vehicle portion 104, and each rear extrusion 202b, 205b is arranged to be integrated into a rear exterior assembly 260 of a rear vehicle portion 106 thereby (when integrated) said SBP establishes a structural chassis of the electric vehicle 100. The integration may be performed e.g. by welding. The terms "front/rear extrusions" may be interchanged with "front/rear horizontal joining members".

Figure 2 further illustrates that each battery cross member 203 of said SBP 200 may be dimensioned to connect/abut to a corresponding body cross member 201 and each battery longitudinal member 205 may be dimensioned to connect/abut to a corresponding body longitudinal member 202. Further, each battery cross member 203 may be welded between a pair of battery longitudinal members 205 and each body cross member 201 is welded between a pair of body longitudinal members 202. Figure 2 illustrates two longitudinal members 202 and three body cross members 201. Further, there is illustrates two battery longitudinal members 205 and three battery cross members 203. Moreover, front and rear extrusions 202a, 205a, 202b, 205b are defined at opposing end portions of each longitudinal member 202, 205. The extrusions joining the ends of said longitudinal members 202, 205 at each end portion (i.e. four end portions are shown in Figure 2).

Figure 2 further illustrates that the SBP 200 structure may define a vehicle sil, and a vehicle battery pack arranged to receive battery modules of an electric vehicle. I.e. the battery modules may be arranged between the portions 230, 240 of Figure 2. In other words, the base plate 230, battery longitudinal members 205 and battery cross members 203 form a bottom battery structure, wherein said body longitudinal members 202, body cross members 201 and floor panel 240 form a top battery structure, wherein the top battery structure is welded to/between said front and rear exterior assembly 250, 260 (see Figure 1), wherein said bottom battery structure is releasably attached to said top battery structure. The bottom battery structure may be attached to the bottom battery structure by fastening elements. The fastening elements may be arranged to connect the longitudinal members 202, 205 and the extrusions 202a, 205a, 202b, 205b. I.e. penetrating the longitudinal members and extrusions.

The bottommost interface surface and the uppermost interface surface 210, 220 may each be formed as a flat, uniform surfaces, creating a uniform sealing force throughout the entire marriage between each body cross member and corresponding battery cross member 201, 203 and between each body longitudinal member and corresponding battery longitudinal member 202, 205. The surfaces 210, 220 may be connected by fastening means such that, the bottom battery structure may be removed by removing said fastening means, thereby allowing access to battery modules simply by removing the bottom battery structure from below the vehicle.

Fig. 3 illustrates a simplified, exemplary version of an electric vehicle reduced to the SBP 200 and front portion 204 as a chassis like structure, similar to Fig. 1. The SBP 200 may be integrated to the front portion 204. In embodiments, SBP 200 may comprise body cross members 201 and battery cross members 203 (shown in Figure 4) and, within, battery cells/packs which comprise the integrated BPS chassis structure. Battery cross member(s) 203 being physically attached to battery pack (not shown) and Body cross member(s) 201, atop (abutting) battery cross members(s) 203. In embodiments, surfaces of the body cross member(s) 201 and the surface 220 (which is shown in Figure 2) of the battery cross member(s) 203 may be each of a flat and/or even surface, which provides for uniform sealing and ease thereof. In embodiments, bolt(s) may be utilized to physically attached the body cross beam(s) 201 and the battery cross beam(s) 203. Inboard bolt(s) along cross beam(s), such as interior frames/brackets described later, along the horizontal plane (x-plane) within SBP 200 may be utilized to secure the body cross member(s) 201 and battery cross members(s) 203. One or more Thru' bolt(s), recommending at least three, may be utilized within the interior cross beam(s), between the body cross members(s) 201 and battery cross member(s) (not shown in fig. 3) for more effective structural support. Outboard bolt(s) may be utilized between crossbeams along the exterior edge between body cross member(s) and battery cross member(s) 201, 203 for secure marriage between member(s).

In embodiments, at least one longitudinal and/or latitudinal beam 219 may integrated above/atop and/or the underside of the SBP (not shown) in physical connection with the front portion 204 and/or rear portion (not shown), which aids in providing support and structural integrity for the SBP 200 and electric vehicle 100 in general, reducing potential damage during impact, particularly during frontal impact loads. In embodiments, the underside of the SBP 200 may comprise body crossbeams (not shown) for additional support and impact protection. Figure 2 further illustrates a cross-sectional plane A-A.

With additional reference to FIG. 4, FIG. 4 shows an exemplary, cross-sectional side part view version of an electric vehicle 100, similarly represented in FIG 1. Figure 4 illustrates a part of the cross-section A-A. As illustrated in Figure 4, the cross members 201, 203 are stacked in a vertical direction y1, whereas each cross member 201, 203 extend in a horizontal direction x1. In aspects herein, The longitudinal member 205 comprises a pipe sub. assembly 322 structurally attached. Pipe sub. assembly 322 may be physically secured via attachment component 324A to the body longitudinal member. Attachment component 324 may comprise any component in which may physically attach two or more components, such as adhesive, tape, screw(s), nut(s), bolt(s), etc. The pipe sub. assembly 322 may be assembled, disassembled and reassembled from exterior assembly 320, at least enabling more efficient and easier access, maintenance, etc. Specifically, the connected body longitudinal members and battery longitudinal members 202, 205 may jointly form a longitudinally extending cavity 322a arranged to receive the longitudinally extending pipe sub assembly 322 of said vehicle 100. Further, the cavity 322a may be formed between a side surface 220' of said battery longitudinal members 205 and a part of a bottommost interface surface 210 of said body longitudinal member 202. The side surface 220' is substantially (+-30 degrees) perpendicular to surface 220.

An attachment implantation, i.e. a battery pack assembly, in embodiments, comprising the SBP 200. As illustrated in figure 4, the pipe sub. Assembly may comprise 332, pipes 338 (brake pipes 338A, pneumatic pipes 338B, cooling pipes 338C, etc.) extending longitudinally and other various components that may be integrated into the electric vehicle 100 within or among the front portion 204 and/or rear portion (not shown) of electric vehicle 100 that may be accessible by the removal of the bottom plate 230 and battery cross and longitudinal members 203, 205. Bottom plate 230 being physically secured via attachment component 324 to the battery cross members 203. Attachment component 324B may comprise any component in which may physically attach two or more components, such as adhesive, tape, screw(s), nut(s), bolt(s), etc. One of ordinary skill in the art would recognize that attachment component(s) 324 utilized throughout may be the same or different components throughout the electric vehicle 100. In embodiments, components such as the bottom plate 332 may be of one solid piece, integrated with the SBP 200. In embodiments, the pipes 338 (brake pipes 338A, pneumatic pipes 338B, cooling pipes 338C, etc.) and other components within the front portion 104 may be reconfigured within the pipe sub. assembly 322 to more or less effectively and efficiently utilize the available space (not shown) within the pipe sub. assembly 322.

While the connection(s)/interaction(s)/embodiment(s) between the SBP 302 and front portion 304 of the electric vehicle 300 are described in greater detail, referring back to FIG. 1, one of ordinary skill in the art would recognize that the same or similar connection(s)/interaction(s)/embodiment(s) of the rear portion 106 may be of same or similar description as provided herein.

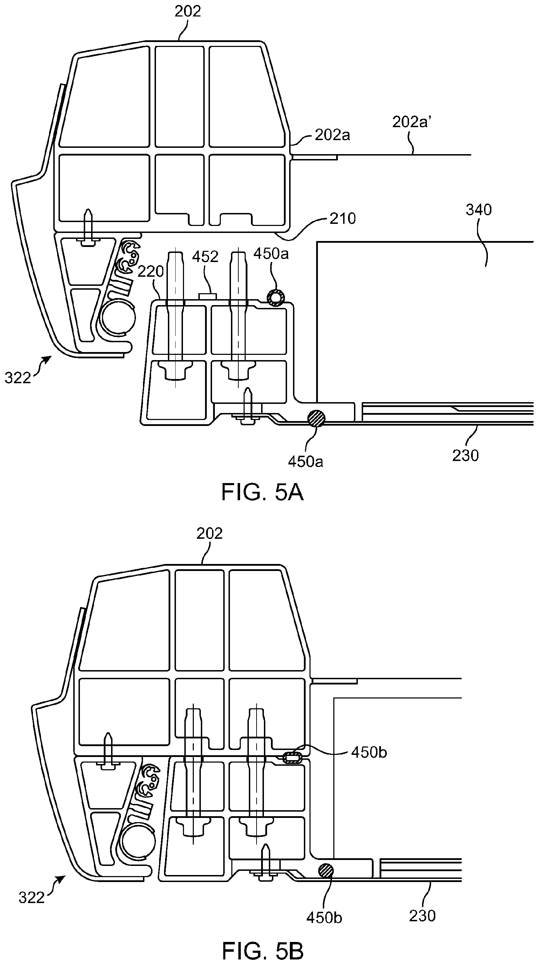

Figs. 5A-B depict an example embodiment of the cross-sectional view of A-A depicted in Figure 3, in which SBP 202, An adhesive seal 450A may be applied onto the attachment/top portion of the longitudinal/cross members, for attachment. The sealing substance or unit may be a form of adhesion. Persons of ordinary skill in the relevant arts will recognize that the adhesive seal 450A may be any variety of substances in which adhesively seals two components, such as Butyl, tape, etc. so that it is thick enough to bridge tolerance variations.

With additional reference to FIGS. 5A-B, FIGS. 5A-B depict exemplary, side cross-sectional part view versions of an electric vehicle 500, similarly represented in FIGS. 1, 2. The two depicted embodiments of the SBP 200 regarding the implementation of a battery cover. FIG. 5A presents a general exploded layout of the SBP 200 structure utilizing a cover for the battery cells (described in FIG. 6) within SBP 200. As depicted, FIG. 5A comprising a bottom plate 230. The SBP 200 may further comprise rubber pad(s), cooling plate(s), thermal pad(s)and a battery cover 240 (i.e. the floor portion may be functioning as a battery cover also). FIG. 5B presents a similar layout as presented in FIG. 5A.

FIG. 6 is a perspective view of a battery module(s) 729 depicted in accordance with an embodiment of the disclosure. It should be noted that the battery module 729 is an example module and the present disclosure is not limited to said module 729. As depicted, the structurally supportive battery module(s) 729 can include one or more belts 759A-B configured to band a plurality of battery cells 751 and other components together under a tensile force. For example, in some embodiments, the bands 759A-B can wrap around an outer perimeter of a plurality of battery cells 751 (e.g., in an x-, y- or z-direction) thereby banding the plurality of cells 751 together to form a unitary block or battery module(s) 729, which can be coupled to one or more other battery modules to form a complete battery pack. A second set of bands (not shown), which may or may not be electrically conductive, can be added to band the plurality of battery cells 751 together along a different axis (e.g., orthogonal to the first one or more belts 759A-B). Accordingly, an overall structural shape of the battery module(s) 729 can be largely formed by the collective group of individual battery cells and other battery components, such as cushion pad(s) 753, end plate(s) 755, insulation cover(s) 757 and sheath cover(s) 761 as illustrated.

With additional reference to FIG. 6, in embodiments, at least portions of the belts 759 can include insulated portions 757 (e.g., non-electrically conductive portions) to define an electrical path for distribution of electrical energy amongst the plurality of battery cells 751 (not shown) and/or to protect the plurality of battery cells 751. In some embodiments, the insulated portions 757 can be an insulated sleeve positioned at least partially around the belts 759 and/or among the memory battery cell(s) 751; although other configurations of the insulated portions 757 are also contemplated.

Thereafter, the banded together battery cells 751 and other components can be covered with a protective sheath cover 761 or other shielding layer to inhibit the intrusion of water, dirt and other foreign matter into the battery module(s) 729. However, unlike conventional electric vehicle battery packs, the protective sheath cover 761 need not be a relatively heavy structurally supportive member (e.g., an aluminum battery tray or the like). Rather, embodiments of the protective sheath cover 757 can be formed as a relatively thin, lightweight membrane, such as a plastic, rubberized shrink wrap, insulating material or the like. In other embodiments, the protective sheath cover 761 can be a rubberized pan or underside vehicle wear resistant material configured to couple to a bottom portion of the vehicle 100, thereby at least partially sealing the battery module(s) 729 between the sheath cover 761 and a bottom of the vehicle 100. In one embodiment, two or more protective sheath covers 761 can be used to seal the same or different portions of the battery module(s) 729; although other configurations are also contemplated.

In embodiments, that is, rather than relying on a conventional battery tray or other housing into which the battery cells and other components are positioned (which adds a significant amount of weight to the vehicle 100), with the aid of the configuration of battery module(s) 729 and the other components as illustrated, making up the structure of the SBP, the SBP may be integrated into/as the chassis of the electric vehicle 100. Such structural integration provides improved structural support/reinforcement to not only protect the power supply, but may also provide additional reinforcement for the passengers and the overall vehicle alike. Furthermore, the integrated SBP provides improved battery capacity and structural efficiency allowing for additional battery module(s) within the same/similar structure of conventional electric vehicles and may reduce the weight of the electric vehicle, as certain component(s) may be integrated into a single component, such as the power supply and the chassis, of the vehicle itself (referring to FIG. 1), which reduces required components and improves occupied space within the vehicle.

To aid in securing the battery module(s) 729 to the bottom side of a vehicle 100, in embodiments, one or more anchor mounts (not shown) may be incorporated and configured to operably couple the battery module(s) 729 to the vehicle 100 or other structure. To isolate electrical contact, in embodiments, at least one of the one or more anchor mounts (not shown) or a fastener (not shown) traversing through the one or more anchor mounts (not shown) can be constructed or aligned with an insulative (e.g., non-electrically conductive) material. In embodiments, as an additional protective feature, battery module(s) 729 may further include one or more end plates 755, which can be configured to provide structural support to the battery module(s) 729, as well as to serve as a cushion, bumper or crumple zone in the event of a collision or impact. This future may be particularly useful in the event of a collision where one or more battery cells 751 may be damaged and prone to a thermal event.

It has been observed that optimal battery cell performance is more likely to occur within a desired temperature range (e.g., 40-45°C, etc.), with a maximum/not to exceed temperature (e.g., 67550°C) being above the desired temperature range, above the maximum/not to exceed temperature), which may result in a failure (e.g., thermal runaway, etc.) of the individual cell. The source of heat may be created internally (e.g., within the cells) or may originate from an external source. One internal heat source can occur as a result of damage (e.g., impact, crushing, etc.). During such an occurrence, heat energy from the cell exhibiting the thermal characteristics can propagate into nearby and adjacent cells, thereby creating the potential for a chain reaction thermal event across multiple battery cells.

The heat produced by a high rate of discharge within an individual cell is generally a function of an electrical current and an internal electrical resistance of the cell. The cells are generally more sensitive to high temperatures when a voltage within the cell is relatively high. This volatility is dependent upon cell chemistry (e.g., lithium-ion reaction, etc.) and varies among different types of cells contemplated for use. In the event that a single cell experiences an over temperature event, the heat produced by the overheated cell may transfer heat energy to adjacent battery cells 751 (e.g., within battery module(s) 729) thereby raising the temperature of the adj acent cells to a point of propagation of the thermal event throughout the entire battery module(s) 729. For example, self-ignition of a battery cell may occur when the temperature of the cell reaches a temperature in a range of between about 120°C and about 150°C.

Conventional electric vehicle designs typically position the battery module(s) 729 below the passenger compartment, which is generally considered an ideal location as the battery pack maintains a low center of gravity of the vehicle, and is spaced away from the outer body of the vehicle, and therefore less prone to being damaged in a collision. Conventional positioning of battery packs under the passenger compartment has proven effective in inhibiting excessive damage to the battery pack in the event of a full frontal or rear collision. By contrast, conventional designs are less effective at preventing damage from a side impact. Specifically, when a side of the vehicle is impacted, a rocker assembly positioned along a lower side of the vehicle can collapse inwardly toward the battery module(s) 729 potentially damaging the battery cells 751/module(s) 729 positioned therein.

In rare circumstances, particularly when subjected to damage from a collision, individual battery cells within the battery pack can overheat. In extreme circumstances, the propagation of heat from the cell experiencing a thermal event can transfer to adjacent cells thereby raising the temperature of the adjacent cells to a point of propagation of the thermal event throughout the entire battery pack (sometimes referred to as a "thermal runaway"), thus destroying the entire battery pack and potentially the electric vehicle.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. A structural battery pack (200), SBP, for integration into an electric vehicle (100), the structural battery pack (200) comprising:
a plurality of body cross members (201) and body longitudinal members (202) jointly defining a common bottommost interface surface (210) and a plurality of battery cross members (203) and battery longitudinal members (205) jointly defining a common uppermost interface surface (220), wherein said bottommost and uppermost interface surfaces (210, 220) when connected, form a structure of the SBP (200);
wherein the battery cross and battery longitudinal members (203, 205) are arranged to be connected to a base plate (230) for forming a support surface for said at least one battery module (340);
wherein inner edges (202a) of said body longitudinal member form a lip (202a'), the lip being arranged to receive a floor panel (240) of said electric vehicle so that the floor panel (240) covers a top surface (211) of said body cross members (201);
the base plate (230) and the floor panel (240) being arranged to jointly encase at least one battery module (340) therebetween;
wherein each body longitudinal member and battery longitudinal member (202, 205) define front and rear extrusions (202a, 205a, 202b, 205b) extruding from front and rear portions thereof respectively, each front extrusion (202a, 205a) being arranged to be integrated into a front exterior assembly (250) of a front vehicle portion (104), and each rear extrusion (202b, 205b) is arranged to be integrated into a rear exterior assembly (260) of a rear vehicle portion (106) thereby said SBP establishes a structural chassis of the electric vehicle (100).

2. The SBP (200) according to claim 1, wherein each battery cross member (203) of said SBP (200) is dimensioned to connect to a corresponding body cross member (201) and each battery longitudinal member (205) is dimensioned to connect to a corresponding body longitudinal member (202).

3. The SBP according to claim 1 or 2, wherein each battery cross member (203) is welded between a pair of battery longitudinal members (205) and each body cross member (201) is welded between a pair of body longitudinal members (202).

4. The SBP (200) according to any one of the preceding claims, wherein the SBP defines a vehicle sil, and a vehicle battery pack arranged to receive battery modules of an electric vehicle.

5. The SBP (200) according to any one of the preceding claims, wherein the base plate (230), battery longitudinal members (205) and battery cross members (203) form a bottom battery structure, wherein said body longitudinal members (202), body cross members (201) and floor panel (240) form a top battery structure, wherein the top battery structure is welded to said front and rear exterior assembly (250, 260), wherein said bottom battery structure is releasably attached to said top battery structure.

6. The SBP (200) according to any one of the preceding claims, wherein the rear exterior assembly (260) comprises at least one of a c-pillar and subframe of said electric vehicle (100), wherein the front exterior assembly (250) comprises at least one of an a-pillar, fire wall and bumper beam of said electric vehicle (100).

7. The SBP (200) according to any one of the preceding claims, wherein said connected body longitudinal members and battery longitudinal members (202, 205) jointly form a longitudinally extending cavity (322a) arranged to receive a longitudinally extending pipe sub assembly (322) of said vehicle (100).

8. The SBP (200) according to claim 7, wherein said cavity (322a) is formed between a side surface (220') of said battery longitudinal members (205) and a part of a bottommost interface surface (210) of said body longitudinal member (202)

9. The SBP (200) according to any one of the preceding claims, wherein the bottommost interface surface and the uppermost interface surface (210, 220) each are formed as a flat, uniform surface, creating a uniform sealing force throughout the entire marriage between each body cross member and corresponding battery cross member (201, 203) and between each body longitudinal member and corresponding battery longitudinal member (202, 205).

10. The SBP according to any one of the preceding claims, wherein said floor panel (240) defines a battery pack lid.

11. The SBP (200) according to any one of the preceding claims, wherein said bottommost and uppermost interface surfaces (210, 220) are connected by fastening means.

12. An electric vehicle (100) comprising:
a vehicle frame comprising a front vehicle portion (104) with a front exterior assembly (250) and a rear vehicle portion (106) with a rear exterior assembly (260);
a battery module;
wherein the SBP (202) according to any one of the claims 1-11 is connected between said front exterior assembly and said rear exterior assembly (250, 260);
wherein the battery module is positioned between said base plate and said floor panel (230, 240).

13. The electric vehicle (100) according to claim 12, wherein a seat rail arrangement (270) of said vehicle is attached to said floor panel (240) and/or body cross members (201), said seat rail arrangement (270) being arranged to receive a passenger seat units.

14. The electric vehicle (100) according to claim 12 or 13, wherein said floor panel (240) is flat, the floor panel (240) being vertically supported by said lip (202a') and body cross members (201).
